(19) Europäisches Patentamt / European Patent Office / Office européen des brevets

(11) **EP 4 433 955 B1**

(12) **EUROPEAN PATENT SPECIFICATION**

(45) Date of publication and mention
of the grant of the patent:
**25.02.2026 Bulletin 2026/09**

(21) Application number: **22839951.5**

(22) Date of filing: **11.11.2022**

(51) International Patent Classification (IPC):
***G06N 7/01*** *(2023.01)*    ***G06N 5/045*** *(2023.01)*
***H04L 9/40*** *(2022.01)*

(52) Cooperative Patent Classification (CPC):
**G06N 7/01; G06N 5/045; H04L 63/1433**

(86) International application number:
**PCT/US2022/079741**

(87) International publication number:
**WO 2023/086954 (19.05.2023 Gazette 2023/20)**

(54) **BAYESIAN MODELING FOR RISK ASSESSMENT BASED ON INTEGRATING INFORMATION FROM DYNAMIC DATA SOURCES**

BAYESSCHE MODELLIERUNG ZUR RISIKOBEURTEILUNG AUF DER BASIS DER INTEGRATION VON INFORMATIONEN AUS DYNAMISCHEN DATENQUELLEN

MODÉLISATION BAYÉSIENNE POUR ÉVALUATION DE RISQUE SUR LA BASE D'INFORMATIONS D'INTÉGRATION PROVENANT DE SOURCES DE DONNÉES DYNAMIQUES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.11.2021 US 202117455015**

(43) Date of publication of application:
**25.09.2024 Bulletin 2024/39**

(60) Divisional application:
**26153318.6**

(73) Proprietor: **Equifax Inc.**
**Atlanta, GA 30309 (US)**

(72) Inventors:
• **SHRESTHA, Prakash**
**Atlanta, Georgia 30309 (US)**
• **BONDUGULA, Rajkumar**
**Atlanta, Georgia 30309 (US)**

(74) Representative: **Greenwoods**
**Queens House**
**55-56 Lincoln's Inn Fields**
**London WC2A 3LJ (GB)**

(56) References cited:
**US-A1- 2020 134 439**

• SINGH DEWAN MD ET AL: "Combining Naive Bayes and Decision Tree for Adaptive Intrusion Detection", INTERNATIONAL JOURNAL OF NETWORK SECURITY & ITS APPLICATIONS, 25 April 2010 (2010-04-25), pages 12 - 25, XP093026390, ISSN: 0975-2307, Retrieved from the Internet <URL:https://arxiv.org/ftp/arxiv/papers/1005/1005.4496.pdf> [retrieved on 20230222], DOI: 10.5121/ijnsa.2010.2202
• LEWIS NICHOLAS: "Modification of Bayesian Updating where Continuous Parameters have Differing Relationships with New and Existing Data", 13 August 2013 (2013-08-13), pages 1 - 25, XP093026674, Retrieved from the Internet <URL:https://arxiv.org/ftp/arxiv/papers/1308/1308.2791.pdf> [retrieved on 20230223], DOI: 10.48550/arxiv.1308.2791
• MUKHERJEE SAURABH ET AL: "Intrusion Detection using Naive Bayes Classifier with Feature Reduction", PROCEDIA TECHNOLOGY, vol. 4, 14 June 2012 (2012-06-14), NL, pages 119 - 128, XP093026451, ISSN: 2212-0173, DOI: 10.1016/j.protcy.2012.05.017

- **RANJAN PATRA MANAS ET AL: "Network intrusion detection using naive bayes", IJCSNS INTERNATIONAL JOURNAL OF COMPUTER SCIENCE AND NETWORK SECURITY, 31 December 2007 (2007-12-31), pages 1 - 7, XP093026453, Retrieved from the Internet <URL:https://www.researchgate.net/publication/241397131_Network_intrusion_detection_using_naive_bayes> [retrieved on 20230223]**

- **BERNS FABIAN ET AL: "Towards Gaussian Processes for Automatic and Interpretable Anomaly Detection in Industry 4.0 :", PROCEEDINGS OF THE INTERNATIONAL CONFERENCE ON INNOVATIVE INTELLIGENT INDUSTRIAL PRODUCTION AND LOGISTICS, 31 December 2020 (2020-12-31), pages 87 - 92, XP093026080, ISBN: 978-989-7584-76-3, DOI: 10.5220/0010130300870092**

**Description**

CROSS-REFERENCES TO RELATED APPLICATIONS

This application claims the benefit and priority of U.S. Patent Application No. 17/455,015, filed November 15, 2021, entitled "BAYESIAN MODELING FOR RISK ASSESSMENT BASED ON INTEGRATING INFORMATION FROM DYNAMIC DATA SOURCES".

TECHNICAL FIELD

The present disclosure relates generally to machine learning. More specifically, but not by way of limitation, this disclosure relates to machine learning using a Bayesian model for assessing risks or performing other operations based on integrating information from dynamic data sources.

BACKGROUND

In machine learning, various models (e.g., artificial neural networks) have been used to perform functions such as providing a prediction of an outcome based on input values. These models are typically trained using training data from existing data sources. As training data from new data sources become available, such as when new features or new training samples become available, these models cannot accommodate the new training data without retraining or rebuilding the model from scratch. For example, to use new features, a neural network based machine learning model has to be re-built to allow the input layer to accept the new features as input. To use new training samples, the machine learning model has to be re-trained using the new training samples. This leads to inefficiency in model training and limits the use of new data sources. Dewan Md. Farid et al, "Combining Naive Bayes and Decision Tree for Adaptive Intrusion Detection", International Journal of Network Security & Its Applications (IJNSA), Volume 2, Number 2, April 2010, describes a learning algorithm for adaptive network intrusion detection using naive Bayesian classifier and decision tree.

SUMMARY

The invention is as set out in the appended claims. Various aspects of the present disclosure provide systems and methods for using a Bayesian model for risk assessment based on integrating information from dynamic data resources. In one example, a method includes determining, using a Bayesian prediction model, a risk indicator for a target entity from predictor variables associated with the target entity. The Bayesian prediction model determines the risk indicator based on a set of parameters associated with the Bayesian prediction model that are calculated based on an initial training dataset and an additional training dataset. The Bayesian prediction model is generated by performing operations including receiving the initial training dataset for the Bayesian prediction model, the initial training dataset comprising a plurality of training records and a plurality of predictor variables; generating the Bayesian prediction model by at least calculating the set of parameters based on the initial training dataset; receiving the additional training dataset for the Bayesian prediction model, the additional training dataset containing an additional predictor variable or an additional training record; and updating the Bayesian prediction model by updating the set of parameters based on the set of parameters and the additional training dataset; and transmitting, to a remote computing device, a responsive message including at least the risk indicator for use in controlling access of the target entity to one or more interactive computing environments.

In another example, a system includes a processing device and a memory device in which instructions executable by the processing device are stored for causing the processing device to determine, using a Bayesian prediction model, a risk indicator for a target entity from predictor variables associated with the target entity and transmit, to a remote computing device, a responsive message including at least the risk indicator for use in controlling access of the target entity to one or more interactive computing environments. The Bayesian prediction model determines the risk indicator based on a set of parameters associated with the Bayesian prediction model that are calculated based on an initial training dataset and an additional training dataset. The Bayesian prediction model is configured to be generated by performing operations including receiving the initial training dataset for the Bayesian prediction model, the initial training dataset comprising a plurality of training records and a plurality of predictor variables, generating the Bayesian prediction model by at least calculating the set of parameters based on the initial training dataset, receiving the additional training dataset for the Bayesian prediction model, the additional training dataset containing an additional predictor variable or an additional training record, and updating the Bayesian prediction model by updating the set of parameters based on the set of parameters and the additional training dataset.

In yet another example, a non-transitory computer-readable storage medium have program code that is executable by a processor device to cause a computing device to determine, using a Bayesian prediction model, a risk indicator for a target entity from predictor variables associated with the target entity and transmit, to a remote computing device, a responsive message including at least the risk indicator for use in controlling access of the target entity to one or more interactive computing environments. The Bayesian prediction model determines the risk indicator based on a set of parameters associated with the Bayesian prediction model that are calculated based on an initial training dataset and an additional training dataset. The Bayesian prediction model is configured to be generated by performing operations including receiving the initial training dataset for the Bayesian prediction model, the initial training dataset comprising a plurality of training records and a plurality of predictor variables; generating the Bayesian prediction model by at least calculating the set of parameters based on the initial training dataset; receiving the additional training dataset for the Bayesian prediction model, the additional training dataset containing an additional predictor variable or an additional training record; and updating the Bayesian prediction model by updating the set of parameters based on the set of parameters and the additional training dataset.

This summary is not intended to identify key or essential features of the claimed subject matter, nor is it intended to be used in isolation to determine the scope of the claimed subject matter. The subject matter should be understood by reference to appropriate portions of the entire specification, any or all drawings, and each claim.

The foregoing, together with other features and examples, will become more apparent upon referring to the following specification, claims, and accompanying drawings.

BRIEF DESCRIPTION OF THE DRAWINGS

FIG. 1 is a block diagram depicting an example of a computing environment in which a Bayesian prediction model can be generated based on dynamic data sources and applied in a risk assessment application, according to certain aspects of the present disclosure.

FIG. 2 is a flow chart depicting an example of a process for utilizing a Bayesian prediction model to generate risk indicators for a target entity based on predictor variables associated with the target entity, according to certain aspects of the present disclosure.

FIG. 3 is a diagram depicting an example of the dynamic training dataset that can be used to generate and update the Bayesian prediction model, according to certain aspects of the present disclosure.

FIG. 4 shows an example of a process for training the Bayesian prediction model, according to certain aspects of the present disclosure.

FIG. 5 shows an example of the binning operation performed on an input predictor variable to ensure the monotonicity of the Bayesian prediction model, according to certain aspects of the present disclosure.

FIG. 6 is a block diagram depicting an example of a computing system suitable for implementing aspects of a power graph convolutional network according to certain aspects of the present disclosure.

DETAILED DESCRIPTION

Certain aspects described herein are provided for using a Bayesian model for risk assessment based on integrating information from dynamic data resources. A risk assessment computing system, in response to receiving a risk assessment query for a target entity, accesses a Bayesian prediction model that is configured to generate a risk indicator for the target entity based on input predictor variables associated with the target entity and is updated whenever new training data is available. The risk assessment computing system computes the risk indicator using the Bayesian prediction model. For a Bayesian prediction model that is generated such that the input predictor variables and the output risk indicator have a monotonic relationship, the risk assessment computing system may also generate explanatory data to indicate the impact of the predictor variables on the risk indicator. The risk assessment computing system transmits a response to the risk assessment query for use by a remote computing system in controlling access of the target entity to one or more interactive computing environments. The response includes the risk indicator and, in some examples, the explanatory data.

An initial Bayesian prediction model is generated based on an initial training dataset. The initial training dataset includes training records or training samples with each training record or sample having multiple predictor variables. In some examples, each training record corresponds to an entity, such as an individual, an organization, a computing system, a computing device, or any other type of entity. The predictor variables for the training record can include the features or characteristics that can be utilized to predict the risk or other aspects associated with the entity when the entity performs certain operations such as accessing an interactive computing environment.

Using the initial training dataset, the Bayesian prediction model can be built by calculating conditional probabilities and class probabilities for the risk prediction. For example, if the Bayesian prediction model is built to predict a classification outcome for an entity based on the predictor variables associated with the entity, the class probability for a particular class is the probability of the class occurring in the initial training dataset. The conditional probabilities can include the conditional probabilities of the entity having the respective predictor variable values given that the entity is classified into a particular class. These probabilities can be utilized to predict the classification for a target entity based on the predictor variables of the target entity. As such, these probabilities are part of the parameters of the Bayesian prediction model.

To use the Bayesian prediction model to make a prediction for a target entity, the maximum a posteriori estimation can be utilized. In these examples, posteriori probabilities of the target entity being classified into individual classes can be calculated. The calculation can be based on the class probabilities and the conditional probabilities of the Bayesian prediction model. The predicted class that leads to the highest posteriori probability can be output as the predicted class.

New training data may become available after the Bayesian prediction model is generated. For example, new data may be collected and added to the initial training dataset as time goes by. In that case, new training records may be added to the training dataset. In other examples, additional data sources can provide additional training datasets to the Bayesian prediction model. These additional training datasets may include predictor variables that are not included in the initial training dataset. These new training records and new predictor variables are utilized to update the Bayesian prediction model as they become available without re-generating the Bayesian prediction model. In other words, the parameters of the exiting Bayesian prediction model can be used to calculate the updated parameters for the Bayesian prediction model, thereby generating the updated Bayesian prediction model.

For example, if the additional training dataset includes an additional predictor variable for each of the training records, the parameters of the Bayesian prediction model can be updated by generating additional probabilities by calculating a conditional probability for the additional predictor variable and generating an additional prior probability by taking the value of the posterior probability of the existing model. If the additional training dataset includes an additional training record, updating the parameters of the Bayesian prediction model can include updating the class probability using the class probability of the existing Bayesian prediction model and the number of training records in the additional training dataset having the corresponding class. In this way, the parameters of the existing Bayesian prediction model can be used to calculate the parameters of the updated Bayesian prediction model without calculating these parameters from scratch.

In some examples, the predictor variables associated with an entity may be correlated and thus contain redundancy. The correlation could impact the prediction accuracy. In order to reduce the correlation and remove the redundancy, the initial training dataset is processed before being used to generate the Bayesian prediction model. Pairwise correlations are calculated among the predictor variables. For a pair of predictor variables having a high correlation (e.g., higher than a threshold value), the predictor variable having a higher predictive score is kept for training while the other predictor variable is removed from the training dataset. In some examples, the Kolmogorov-Smirnov (KS) score of a predictor variable can be used as the predictive score of the predictor variable and Spearman correlation can be used for calculating the correlation. The processed predictor variables, with potentially fewer predictor variables than the initial training dataset, can be utilized to generate the Bayesian prediction model as described above. During the prediction for the target entity, the removed predictor variables are not used for prediction.

Similar processing can be performed when new predictor variables are added to the model. For example, if the additional training dataset includes a new predictor variable, the correlation between the new predictor variable and each of the existing predictor variables can be calculated and compared with a threshold. If the correlation between the new predictor variable and an existing predictor variable is higher than a threshold value, the predictive score of the new predictor variable and that of the existing one can be compared. The predictor variable having the higher predictive score is used in the Bayesian prediction model while the other one is removed or not included in the model.

In some cases, it is helpful to provide explanatory data for the prediction made by the Bayesian prediction model. The explanatory data can indicate the impact of one or more input predictor variables on the predicted output risk indicator. To provide the explanatory data, the Bayesian prediction model can be generated to enforce monotonicity between each of the input predictor variables and the output prediction (e.g., the posterior probability).

In some examples, the monotonicity is enforced by processing each predictor variable so that the values of the predictor variable are monotonic to the posterior probability (e.g., a positive change in the predictor variable always leads to a positive or negative change in the posterior probability). To do so, the values of a predictor variable are divided into a first set of bins and the posterior probability for each bin is determined. If the values of the posterior probability are not monotonic with respect to the values of the predictor variables in the bins, a second set of bins is generated. The second set of bins can be generated by merging two or more bins in the first set of bins into one bin so that representative values of the predictor variable in the second set of bins are monotonic with respect to the posterior probability. The second set of bins are used to represent the predictor variable when the Bayesian prediction model is generated. For example, a value of the predictor variable can be converted into the representative value of a bin in the second set where the value of the predictor variable falls into. The parameters of the Bayesian prediction model (i.e., the conditional probabilities and class probabilities) can also be calculated based on the binned predictor variables instead of the initial predictor variables. In this way, the output of the Bayesian prediction model (e.g., the posterior probability) can be made monotonic to each of the predictor variables and the impact of a predictor variable can be generated using methods such as points below max for use in generating the explanatory data.

The generated or updated Bayesian prediction model can be used to predict risk indicators as discussed above. For example, a risk assessment query for a target entity can be received from a remote computing device. In response to the assessment query, an output risk indicator for the target entity can be computed by applying the Bayesian prediction model to predictor variables associated with the target entity. Further, explanatory data indicating relationships between the risk indicator and the input predictor variables can also be calculated, if the Bayesian prediction model is generated based on the binned predictor variables for monotonicity. A responsive message including at least the output risk indicator can be transmitted to the remote computing device.

Certain aspects described herein can provide a prediction model that can be dynamically updated as additional training datasets become available, thereby overcoming the issues associated with the existing models identified above. For instance, the parameters of the existing Bayesian prediction model can be used to calculate the parameters of the updated Bayesian prediction model along with the additional training dataset. As a result, the Bayesian prediction model can be updated with fewer computation operations in less time, thereby reducing the computing and storage resource consumption and increasing the response time. This also allows the data in the additional training datasets to be incorporated into the Bayesian prediction model faster, thereby allowing more accurate prediction decisions to be made earlier than conventional prediction models. Further, the interpretability of the Bayesian prediction model makes the prediction decisions explainable and allows entities to improve their respective predictor variables or features thereby obtaining desired decisions.

Additional or alternative aspects can implement or apply rules of a particular type that improve existing technological processes involving machine-learning techniques. For instance, to generate the Bayesian prediction model, a particular set of rules can be employed in the training. For example, the rules related to detecting high correlations among the predictor variables and removing predictor variables based on the predictive score can be implemented so that redundancies among the predictor variables can be removed to improve the prediction accuracy. The rules related to binning the predictor variable values can allow for a monotonic relationship between the predictor variable and the prediction to be formed thereby allowing the explanatory data to be generated.

These illustrative examples are given to introduce the reader to the general subject matter discussed here and are not intended to limit the scope of the disclosed concepts. The following sections describe various additional features and examples with reference to the drawings in which like numerals indicate like elements, and directional descriptions are used to describe the illustrative examples but, like the illustrative examples, should not be used to limit the present disclosure.

*Operating Environment Example for Model Operations*

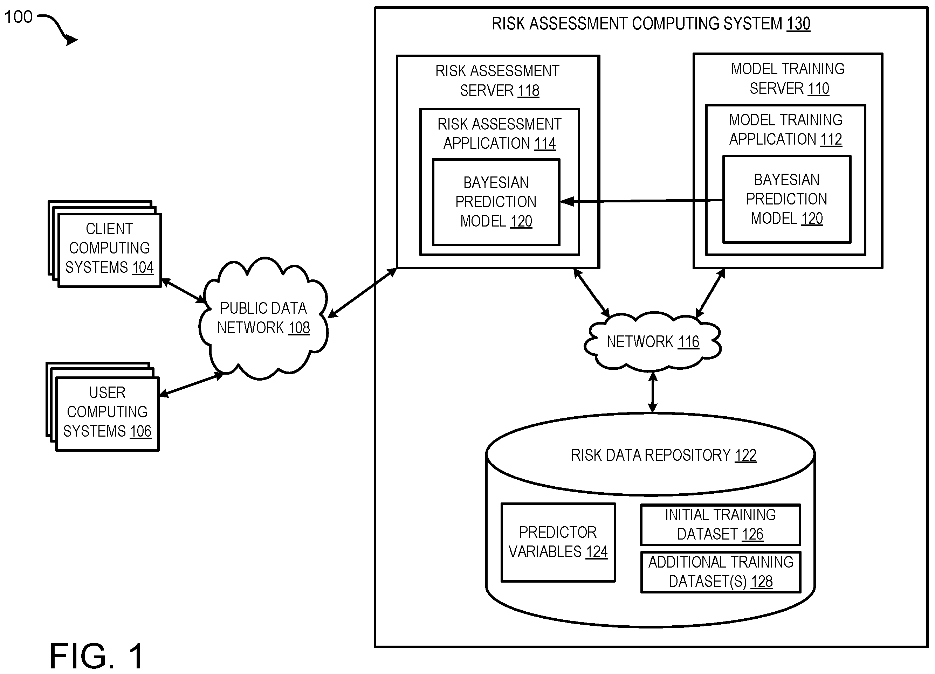

Referring now to the drawings, FIG. 1 is a block diagram depicting an example of an operating environment 100 in which a risk assessment computing system 130 can build and train a Bayesian prediction model that can be utilized to predict risk indicators based on predictor variables. FIG. 1 depicts examples of hardware components of a risk assessment computing system 130, according to some aspects. The risk assessment computing system 130 can be a specialized computing system that may be used for processing large amounts of data using a large number of computer processing cycles. The risk assessment computing system 130 can include a model training server 110 for building and training a Bayesian prediction model 120. The risk assessment computing system 130 can further include a risk assessment server 118 for performing a risk assessment for given predictor variables 124 using the trained Bayesian prediction model 120.

The model training server 110 can include one or more processing devices that execute program code, such as a model training application 112. The program code can be stored on a non-transitory computer-readable medium. The model training application 112 can execute one or more processes to train and optimize a model for predicting risk indicators based on predictor variables 124.

In some aspects, the model training application 112 can build and train a Bayesian prediction model 120 utilizing an initial training dataset 126. The initial training dataset 126 can include training records with each training record having multiple predictor variables. The model training application 112 can additionally train the Bayesian prediction model 120 utilizing additional training dataset(s) 128, which may be received after the Bayesian prediction model 120 is initially trained. The additional training dataset(s) 128 can each include an additional predictor variable or an additional training record. The initial training dataset 126 and the additional training dataset(s) 128 can be stored in one or more network-attached storage units on which various repositories, databases, or other structures are stored. Examples of these data structures are the risk data repository 122.

Network-attached storage units may store a variety of different types of data organized in a variety of different ways and from a variety of different sources. For example, the network-attached storage unit may include storage other than primary storage located within the model training server 110 that is directly accessible by processors located therein. In some aspects, the network-attached storage unit may include secondary, tertiary, or auxiliary storage, such as large hard drives, servers, virtual memory, among other types. Storage devices may include portable or non-portable storage devices, optical storage devices, and various other mediums capable of storing and containing data. A machine-readable storage medium or computer-readable storage medium may include a non-transitory medium in which data can be stored and that does not include carrier waves or transitory electronic signals. Examples of a non-transitory medium may include, for example, a magnetic disk or tape, optical storage media such as a compact disk or digital versatile disk, flash memory, memory, or memory devices.

The risk assessment server 118 can include one or more processing devices that execute program code, such as a risk assessment application 114. The program code can be stored on a non-transitory computer-readable medium. The risk assessment application 114 can execute one or more processes to utilize the Bayesian prediction model 120 trained by the model training application 112 to predict risk indicators based on input predictor variables 124. In addition, the Bayesian prediction model 120 can also be utilized to generate explanatory data for the predictor variables, which can indicate an effect or an amount of impact that one or more predictor variables have on the risk indicator.

The output of the trained Bayesian prediction model 120 can be utilized to modify a data structure in the memory or a data storage device. For example, the predicted risk indicator and/or the explanatory data can be utilized to reorganize, flag, or otherwise change the predictor variables 124 involved in the prediction by the Bayesian prediction model 120. For instance, predictor variables 124 stored in the risk data repository 122 can be attached with flags indicating their respective amount of impact on the risk indicator. Different flags can be utilized for different predictor variables 124 to indicate different levels of impact. Additionally, or alternatively, the locations of the predictor variables 124 in the storage, such as the risk data repository 122, can be changed so that the predictor variables 124 or groups of predictor variables 124 are ordered, ascendingly or descendingly, according to their respective amounts of impact on the risk indicator.

By modifying the predictor variables 124 in this way, a more coherent data structure can be established which enables the data to be searched more easily. In addition, further analysis of the Bayesian prediction model 120 and the outputs of the Bayesian prediction model 120 can be performed more efficiently. For instance, predictor variables 124 having the most impact on the risk indicator can be retrieved and identified more quickly based on the flags and/or their locations in the risk data repository 122. Further, updating the Bayesian prediction model 120, such as re-training the Bayesian prediction model 120 based on the additional training dataset(s) 128, can be performed more efficiently especially when computing resources are limited. For example, updating or retraining the Bayesian prediction model 120 can be performed by incorporating new values of the predictor variables 124 having the most impact on the output risk indicator based on the attached flags without utilizing new values of all the predictor variables 124.

Furthermore, the risk assessment computing system 130 can communicate with various other computing systems, such as client computing systems 104. For example, client computing systems 104 may send risk assessment queries to the risk assessment server 118 for risk assessment, or may send signals to the risk assessment server 118 that control or otherwise influences different aspects of the risk assessment computing system 130. The client computing systems 104 may also interact with user computing systems 106 via one or more public data networks 108 to facilitate interactions between users of the user computing systems 106 and interactive computing environments provided by the client computing systems 104.

Each client computing system 104 may include one or more third-party devices, such as individual servers or groups of servers operating in a distributed manner. A client computing system 104 can include any computing device or group of computing devices operated by a seller, lender, or other providers of products or services. The client computing system 104 can include one or more server devices. The one or more server devices can include or can otherwise access one or more non-transitory computer-readable media. The client computing system 104 can also execute instructions that provide an interactive computing environment accessible to user computing systems 106. Examples of the interactive computing environment include a mobile application specific to a particular client computing system 104, a web-based application accessible via a mobile device, etc. The executable instructions are stored in one or more non-transitory computer-readable media.

The client computing system 104 can further include one or more processing devices that are capable of providing the interactive computing environment to perform operations described herein. The interactive computing environment can include executable instructions stored in one or more non-transitory computer-readable media. The instructions providing the interactive computing environment can configure one or more processing devices to perform operations described herein. In some aspects, the executable instructions for the interactive computing environment can include instructions that provide one or more graphical interfaces. The graphical interfaces are used by a user computing system 106 to access various functions of the interactive computing environment. For instance, the interactive computing environment may transmit data to and receive data from a user computing system 106 to shift between different states of the interactive computing environment, where the different states allow one or more electronics transactions between the user computing system 106 and the client computing system 104 to be performed.

In some examples, a client computing system 104 may have other computing resources associated therewith (not shown in FIG. 1), such as server computers hosting and managing virtual machine instances for providing cloud computing services, server computers hosting and managing online storage resources for users, server computers for providing database services, and others. The interaction between the user computing system 106 and the client computing system 104 may be performed through graphical user interfaces presented by the client computing system 104 to the user computing system 106, or through an application programming interface (API) calls or web service calls.

A user computing system 106 can include any computing device or other communication device operated by a user, such as a consumer or a customer. The user computing system 106 can include one or more computing devices, such as laptops, smartphones, and other personal computing devices. A user computing system 106 can include executable instructions stored in one or more non-transitory computer-readable media. The user computing system 106 can also include one or more processing devices that are capable of executing program code to perform operations described herein. In various examples, the user computing system 106 can allow a user to access certain online services from a client computing system 104 or other computing resources, to engage in mobile commerce with a client computing system 104, to obtain controlled access to electronic content hosted by the client computing system 104, etc.

For instance, the user can use the user computing system 106 to engage in an electronic transaction with a client computing system 104 via an interactive computing environment. An electronic transaction between the user computing system 106 and the client computing system 104 can include, for example, the user computing system 106 being used to request online storage resources managed by the client computing system 104, acquire cloud computing resources (e.g., virtual machine instances), and so on. An electronic transaction between the user computing system 106 and the client computing system 104 can also include, for example, query a set of sensitive or other controlled data, access online financial services provided via the interactive computing environment, submit an online credit card application or other digital application to the client computing system 104 via the interactive computing environment, operating an electronic tool within an interactive computing environment hosted by the client computing system (e.g., a content-modification feature, an application-processing feature, etc.).

In some aspects, an interactive computing environment implemented through a client computing system 104 can be used to provide access to various online functions. As a simplified example, a website or other interactive computing environment provided by an online resource provider can include electronic functions for requesting computing resources, online storage resources, network resources, database resources, or other types of resources. In another example, a website or other interactive computing environment provided by a financial institution can include electronic functions for obtaining one or more financial services, such as loan application and management tools, credit card application and transaction management workflows, electronic fund transfers, etc. A user computing system 106 can be used to request access to the interactive computing environment provided by the client computing system 104, which can selectively grant or deny access to various electronic functions. Based on the request, the client computing system 104 can collect data associated with the user and communicate with the risk assessment server 118 for risk assessment. Based on the risk indicator predicted by the risk assessment server 118, the client computing system 104 can determine whether to grant the access request of the user computing system 106 to certain features of the interactive computing environment.

In a simplified example, the system depicted in FIG. 1 can configure a Bayesian prediction model to be used both for accurately determining risk indicators, such as credit scores, using predictor variables and determining explanatory data for the predictor variables. A predictor variable can be any variable predictive of risk that is associated with an entity. Any suitable predictor variable that is authorized for use by an appropriate legal or regulatory framework may be used.

Examples of predictor variables used for predicting the risk associated with an entity accessing online resources include, but are not limited to, variables indicating the demographic characteristics of the entity (e.g., name of the entity, the network or physical address of the company, the identification of the company, the revenue of the company), variables indicative of prior actions or transactions involving the entity (e.g., past requests of online resources submitted by the entity, the amount of online resource currently held by the entity, and so on.), variables indicative of one or more behavioral traits of an entity (e.g., the timeliness of the entity releasing the online resources), etc. Similarly, examples of predictor variables used for predicting the risk associated with an entity accessing services provided by a financial institute include, but are not limited to, indicative of one or more demographic characteristics of an entity (e.g., age, gender, income, etc.), variables indicative of prior actions or transactions involving the entity (e.g., information that can be obtained from credit files or records, financial records, consumer records, or other data about the activities or characteristics of the entity), variables indicative of one or more behavioral traits of an entity, etc.

The predicted risk indicator can be utilized by the service provider to determine the risk associated with the entity accessing a service provided by the service provider, thereby granting or denying access by the entity to an interactive computing environment implementing the service. For example, if the service provider determines that the predicted risk indicator is lower than a threshold risk indicator value, then the client computing system 104 associated with the service provider can generate or otherwise provide access permission to the user computing system 106 that requested the access. The access permission can include, for example, cryptographic keys used to generate valid access credentials or decryption keys used to decrypt access credentials. The client computing system 104 associated with the service provider can also allocate resources to the user and provide a dedicated web address for the allocated resources to the user computing system 106, for example, by adding it in the access permission. With the obtained access credentials and/or the dedicated web address, the user computing system 106 can establish a secure network connection to the computing environment hosted by the client computing system 104 and access the resources via invoking API calls, web service calls, HTTP requests, or other proper mechanisms

Each communication within the operating environment 100 may occur over one or more data networks, such as a public data network 108, a network 116 such as a private data network, or some combination thereof. A data network may include one or more of a variety of different types of networks, including a wireless network, a wired network, or a combination of a wired and wireless network. Examples of suitable networks include the Internet, a personal area network, a local area network ("LAN"), a wide area network ("WAN"), or a wireless local area network ("WLAN"). A wireless network may include a wireless interface or a combination of wireless interfaces. A wired network may include a wired interface. The wired or wireless networks may be implemented using routers, access points, bridges, gateways, or the like, to connect devices in the data network.

The number of devices depicted in FIG. 1 is provided for illustrative purposes. Different numbers of devices may be used. For example, while certain devices or systems are shown as single devices in FIG. 1, multiple devices may instead be used to implement these devices or systems. Similarly, devices or systems that are shown as separate, such as the model training server 110 and the risk assessment server 118, may be instead implemented in a signal device or system.

*Examples of Operations Involving Bayesian Modeling*

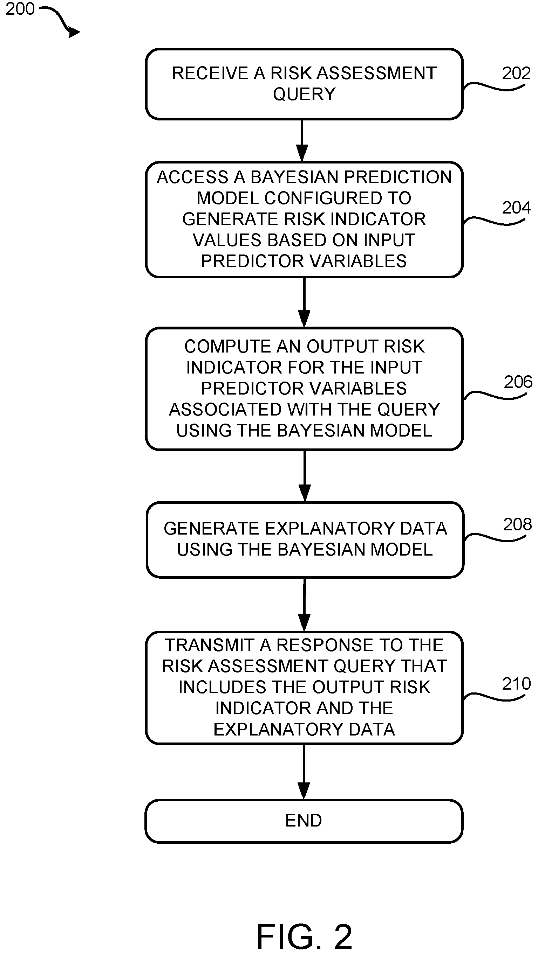

FIG. 2 is a flow chart depicting an example of a process 200 for utilizing a Bayesian prediction model to generate risk indicators for a target entity based on predictor variables associated with the target entity. One or more computing devices (e.g., the risk assessment server 118) implement operations depicted in FIG. 2 by executing suitable program code (e.g., the risk assessment application 114). For illustrative purposes, the process 200 is described with reference to certain examples depicted in the figures. Other implementations, however, are possible.

At operation 202, the process 200 involves receiving a risk assessment query for a target entity from a remote computing device, such as a computing device associated with the target entity requesting the risk assessment. The risk assessment query can also be received by the risk assessment server 118 from a remote computing device associated with an entity authorized to request risk assessment of the target entity.

At operation 204, the process 200 involves accessing a Bayesian prediction model 120 trained to generate risk indicator values based on input predictor variables 124. As described in more detail with respect to FIG. 1 above, examples of predictor variables 124 can include data associated with an entity that describes prior actions or transactions involving the entity (e.g., information that can be obtained from credit files or records, financial records, consumer records, or other data about the activities or characteristics of the entity), behavioral traits of the entity, demographic traits of the entity, or any other traits that may be used to predict risks associated with the entity. In some aspects, predictor variables can be obtained from credit files, financial records, consumer records, etc. The risk indicator can indicate a level of risk associated with the entity, such as a credit score of the entity.

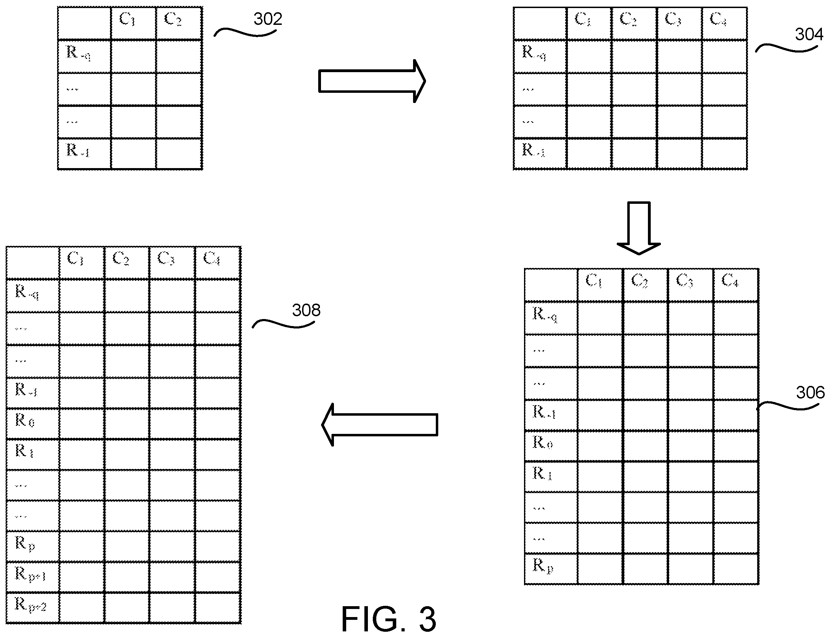

The Bayesian prediction model 120 can be constructed and trained based on training records and predictor variables, such as the initial training dataset 126. Over time, additional training datasets 128 of additional training records or predictor variables maybe received and used to update the Bayesian prediction model 120. Additional details regarding training the model will be presented below with regard to FIGS. 3 - 4.

At operation 206, the process 200 involves computing an output risk indicator for the input predictor variables 124 associated with the query using the Bayesian prediction model 120. The predictor variables 124 associated with the target entity can be obtained from a predictor variable database configured to store predictor variables associated with various entities. The output of the Bayesian prediction model 120 can include the risk indicator for the target entity based on its current predictor variables. The risk indicator can include at least one of a risk classification (e.g., default or good standing) for the target entity or a probability of the target entity being classified in the risk classification.

At operation 208, the process 200 involves generating explanatory data using the Bayesian prediction model 120. The explanatory data can indicate the impact of one or more input predictor variables on the predicted output risk indicator. To provide the explanatory data, the Bayesian prediction model 120 can be generated to enforce monotonicity between each of the input predictor variable and the output prediction (e.g., the posterior probability).

In some examples, the monotonicity is enforced by processing each predictor variable so that the values of the predictor variable are monotonic to the posterior probability (e.g., a positive change in the predictor variable always leads to a positive or negative change in the posterior probability). To do so, the values of a predictor variable are divided into a first set of bins and posterior probability for each bin is determined. If the values of the posterior probability are not monotonic with respect to the values of the predictor variables in the bins, a second set of bins is generated. The second set of bins can be generated by merging two or more bins in the first set of bins into one bin so that representative values of the predictor variable in the second set of bins are monotonic with respect to the posterior probability. The second set of bins are used to represent the predictor variable when the Bayesian prediction model 120 is generated. For example, a value of the predictor variable can be converted into the representative value of a bin in the second set where the value of the predictor variable falls into. The parameters of the Bayesian prediction model 120 (i.e., the conditional probabilities and class probabilities) can also be calculated based on the binned predictor variables instead of the initial predictor variables.

In this way, the output of the Bayesian prediction model 120 (e.g., the posterior probability) can be made monotonic to each of the predictor variables 124 and the impact of a predictor variable can be generated using methods such as point-below-max for use in generating the explanatory data.

At operation 210, the process 200 involves transmitting a response to the risk assessment query. The response can include the risk indicator generated using the Bayesian prediction model 120 and the explanatory data. The risk indicator can be used for one or more operations that involve performing an operation with respect to the target entity based on a predicted risk associated with the target entity. In one example, the risk indicator can be utilized to control access to one or more interactive computing environments by the target entity. As discussed above with regard to FIG. 1, the risk assessment computing system 130 can communicate with client computing systems 104, which may send risk assessment queries to the risk assessment server 118 to request risk assessment. The client computing systems 104 may be associated with technological providers, such as cloud computing providers, online storage providers, or financial institutions such as banks, credit unions, credit-card companies, insurance companies, or other types of organizations. The client computing systems 104 may be implemented to provide interactive computing environments for customers to access various services offered by these service providers. Customers can utilize user computing systems 106 to access the interactive computing environments thereby accessing the services provided by these providers.

For example, a customer can submit a request to access the interactive computing environment using a user computing system 106. Based on the request, the client computing system 104 can generate and submit a risk assessment query for the customer to the risk assessment server 118. The risk assessment query can include, for example, an identity of the customer and other information associated with the customer that can be utilized to generate or retrieve predictor variables for the customer. The risk assessment server 118 can perform a risk assessment based on predictor variables for the customer and return the predicted risk indicator and explanatory data to the client computing system 104.

Based on the received risk indicator, the client computing system 104 can determine whether to grant the customer access to the interactive computing environment. If the client computing system 104 determines that the level of risk associated with the customer accessing the interactive computing environment and the associated technical or financial service is too high, the client computing system 104 can deny access by the customer to the interactive computing environment. Conversely, if the client computing system 104 determines that the level of risk associated with the customer is acceptable, the client computing system 104 can grant access to the interactive computing environment by the customer and the customer would be able to utilize the various services provided by the service providers. For example, with the granted access, the customer can utilize the user computing system 106 to access clouding computing resources, online storage resources, web pages or other user interfaces provided by the client computing system 104 to execute applications, store data, query data, submit an online digital application, operate electronic tools, or perform various other operations within the interactive computing environment hosted by the client computing system 104.

The risk assessment application 114 may provide recommendations to a target entity based on the generated explanatory data. The recommendations may indicate one or more actions that the target entity can take to improve the risk indicator (e.g., improve a credit score).

*Examples of Bayesian Prediction Model*

A Bayesian prediction model can be built based on Bayes Theorem, which is expressed as:

$$P(C|x) = \frac{P(x|C)P(C)}{P(x)} \tag{1}$$

where $P(C|x)$ is the posterior probability of a class (C) given the predictor variable (x), $P(C)$ is the prior probability of the class, $P(x|C)$ is the likelihood corresponding to probability of the predictor variable given the class, and $P(x)$ is the prior probability of the predictor variable. Using Bayes Theorem, a posterior distribution of the parameters across classes of interest can be computed using prior beliefs updated with the likelihood, which is expressed as:

$$P(C|features) = \frac{P(features|C)P(C)}{P(features)} \tag{2}$$

where the features can be the predictor variables and the predicted C can be the risk indictor. Alternatively, the posterior probability $P(C|features)$ can be output as the risk indicator.

For a set of predictor variables $x_1, x_2, ..., x_n$, equation (2) changes into:

$$P(C|x_1, x_2, \dots, x_n) = \frac{P(x_1, x_2, \dots, x_n|C)P(C)}{P(x_1, x_2, \dots, x_n)}. \qquad (3)$$

Assuming that the predictor variables are independent of each other, the likelihood in equation (3) can be written as:

$$P(x_1, x_2, \dots, x_n|C) = P(x_1|C) * P(x_2|C) * \dots P(x_n|C) * P(C) \qquad (4)$$

where $P(x_i|C)$ is the likelihood of predictor variable ($x_i$) given the class. This may be replaced with a probability mass function (PMF) if the predictor variable or feature is a discrete or categorical feature (e.g., gender), or with a probability density function (PDF) if the predictor variable or feature is a continuous or numerical variable (e.g., age).

For a first dataset (dataset 1) such as the initial training dataset, the Bayesian prediction model for determining a posterior probability of a given class (class i) given the first dataset can be formulated as:

$$P\left(\frac{class\ i}{dataset\ 1}\right) = \frac{p\left(\frac{dataset\ 1}{class\ i}\right) * p(class\ i)}{p\left(\frac{dataset\ 1}{class\ i}\right) * p(class\ i) + p\left(\frac{dataset\ 1}{class\ j}\right) * p(class\ j)} \qquad (5)$$

where $P(class\ i|dataset\ 1)$ is the posterior probability of class i given the dataset 1, $P(class\ i)$ is the prior probability of the class, $P(dataset\ 1|class\ i)$ is the likelihood corresponding to a probability of observing the current predictor variables in the dataset 1 if the dataset 1 belongs to class i. Examples of class i and class j can be delinquent (e.g., 90 days past due) and in good standing (e.g., pays as agreed). An additional dataset (dataset 2) can be added, and the updated Bayesian prediction model can be expressed as:

$$P\left(\frac{class\ i}{dataset\ 2 + dataset\ 1}\right)$$
$$= \frac{p\left(\frac{dataset\ 2}{class\ i}\right) * p\left(\frac{class\ i}{dataset\ 1}\right)}{p\left(\frac{dataset\ 2}{class\ i}\right) * p\left(\frac{class\ i}{dataset\ 1}\right) + p\left(\frac{dataset\ 2}{class\ j}\right) * p\left(\frac{class\ j}{dataset\ 1}\right)}. \qquad (6)$$

If a third dataset (dataset 3) is added, the Bayesian prediction model can be expressed as:

$$P\left(\frac{class\ i}{dataset\ 3 + dataset\ 2 + dataset\ 1}\right) =$$
$$\frac{p\left(\frac{dataset\ 3}{class\ i}\right) * p\left(\frac{class\ i}{dataset\ 2 + dataset\ 1}\right)}{p\left(\frac{dataset\ 3}{class\ i}\right) * p\left(\frac{class\ i}{dataset\ 2 + dataset\ 1}\right) + p\left(\frac{dataset\ 3}{class\ j}\right) * p\left(\frac{class\ j}{dataset\ 2 + dataset\ 1}\right)}$$
$$(7)$$

FIG. 3 is a diagram depicting an example of the dynamic training dataset that can be used to generate and update the Bayesian prediction model, according to certain aspects of the present disclosure. In an example, a Bayesian model is built to predict three target classes, class 1- class 3 with four input features, feature 1 - feature 4 based on a dataset. For example, the dataset can be an Iris dataset with one hundred fifty samples, and the three target classes can be setosa, virginica, and versicolor, and the four features can be sepal length, sepal width, petal length, and petal width. The overall training dataset can include multiple sub-datasets. For example, the Iris dataset can include four sub-datasets: an initial training dataset, and three additional training datasets. The initial dataset can include thirty samples with features 1 and 2, the first additional dataset can include the thirty samples of the initial training dataset with features 3 and 4, the second additional dataset can include thirty additional samples with features 1 through 4, and the third additional dataset can include thirty additional samples with features 1 through 4 that are updated one sample at a time.

In FIG. 3, dataset 302 can correspond to the initial dataset, dataset 304 can correspond to the first additional dataset added to dataset 302, dataset 306 can correspond to the second additional dataset added to dataset 304, and dataset 308 can correspond to the third additional dataset added to dataset 306. Given dataset 302, the posterior probability for class *i* with feature 1 and feature 2, the Bayesian prediction model can be constructed as:

$$P(C = class\ i|feature\ 1, feature\ 2) \propto$$

$$P(C = feature\ 1, feature\ 2|C = class\ i) * P(C = class\ i) \quad (8)$$

Assuming that feature 1 and feature 2 are independent of each other, equation (8) becomes:

$$P(C = class\ i|feature\ 1, feature\ 2) \propto$$

$$P(feature\ 1|C = class\ i) * P(feature\ 2|C = class\ i) * P(C = class\ i) \quad (9)$$

where $P(feature\ 1|C = class\ i)$ and $P(feature\ 2|C = class\ i)$ are conditional probabilities, also called likelihoods, for feature 1 and feature 2, respectively. $P(C = class\ i)$ is a class probability, also called a prior probability. The various probabilities in equations (6) and (7) are calculated by calculated frequencies of certain values. These probabilities can be stored in a look-up table. Cells with missing values may be ignored when calculating the frequency of the values. Similarly, a posterior probability can be computed for the other classes as follows:

$$P(C = class\ 2|feature\ 1, feature\ 2) \propto$$

$$P(feature\ 1|C = class\ 2) * P(feature\ 2|C = class\ 2) * P(C = class\ 2) \quad (10)$$

$$P(C = class\ 3|feature\ 1, feature\ 2) \propto$$

$$P(feature\ 1|C = class\ 3) * P(feature\ 2|C = class\ 3) * P(C = class\ 3) \quad (11)$$

Based on the dataset 302, a set of parameters can be generated. The set of parameters can include a set of probabilities that include a likelihood probability for a predictor variable indicating a conditional probability of the predictor variable conditioned on a value of the risk indicator or a classification, such as $P(feature\ 1|C = class\ i)$ and $P(feature\ 2|C = class\ i)$ in equations (9)-(11). The set of parameters also include a prior probability indicating a probability of the risk indicator taking a given value or a classification, such as $P(C = class\ i)$ in equation (9)-(11).

Maximum a posteriori estimation can be used to predict a class, which can correspond to the risk indicator. For example, the class can be predicted based on the highest posterior probability among equations (9), (10), and (11). The maximum a posteriori estimation can be expressed as:

$$C^{MAP} = \underset{i\in\{class1, clas\ , class3\}}{\mathrm{argmax}} [P(feature\ 1|class_i) * P(feature\ 2|class_i)] *$$

$$(class_i) = \underset{i\in\{class1, class2, clas\ \}}{\mathrm{argmax}} \left[\prod_{j=1}^{2} P(feature_j|class_i)\right] * P(class_i). \quad (12)$$

The log can be taken on both sides of the equation to obtain:

$$\ln(C^{MAP}) = \underset{i\in\{class\ , cla\ , class\ \}}{\mathrm{argmax}} \ln([P(feature\ 1|class_i) * P(feature\ 2|class_i)] *$$

$$P(class_i)) = \underset{i\in\{class\ , class2, class3\}}{\mathrm{argmax}} \left[\sum_{j=1}^{2} lnP(feature_j|class_i)\right] + \ln(P(class_i)). \quad (13)$$

A conditional probability for a class can be calculated under the assumption that both feature 1 and feature 2 follow a normal distribution. Given a mean ($\mu_{feature1}$) and variance ($\sigma^2_{feature1}$) for feature 1 corresponding to class 1 from the training samples, the conditional probability for class 1 can be expressed as:

$$P(feature\ 1 = x|C = class\ 1) = \frac{1}{\sigma_{feature1}\sqrt{2\pi}} \exp\left[-\frac{(x-\mu_{feature1})^2}{2\sigma^2_{feature1}}\right]. \quad (14)$$

Similarly, a conditional probability for feature 2 with class 1, assuming it also follows a normal distribution, can be computed by:

$$P(feature\ 2 = y | C = class\ 1) = \frac{1}{\sigma_{feature2}\sqrt{2\pi}}\exp\left[-\frac{\left(y - \mu_{feature2}\right)^2}{2\sigma_{feature2}^2}\right]. \qquad (15)$$

Since class is a discrete variable, class probability for each class can be computed as below.

$$P(C = class\ 1) = \frac{\#\ of\ instances\ with\ class\ 1}{total\ instances} \qquad (16)$$

$$P(C = class\ 2) = \frac{\#\ of\ instances\ with\ class\ 2}{total\ instances} \qquad (17)$$

$$P(C = class\ 3) = \frac{\#\ of\ instances\ with\ class\ 3}{total\ instances} \qquad (18)$$

To add an additional feature, such as to obtain dataset 304 by adding feature 3 and feature 4, today's posterior becomes tomorrow's prior in the Bayesian prediction model. With three features (feature 1 - feature 3), the posterior probability equation becomes:

$$P(C = class\ 1 | feature\ 1, feature\ 2, feature\ 3) \propto$$
$$P(C = feature\ 1, feature\ 2, feature\ 3| = class\ 1) * P(C = class\ 1). \qquad (19)$$

Assuming feature 1 - feature 3 are independent, equation (19) can be rewritten as:

$$P(C = class\ 1 | feature\ 1, feature\ 2, feature\ 3) \propto$$
$$P(feature\ 1 | C = class\ 1) * P(feature\ 2 | C = class\ 1) *$$
$$P(feature\ 3 | C = class\ 1) * P(C = class\ 1). \qquad (20)$$

Using equation (8), equation (20) can be rewritten as:

$$P(C = class\ 1 | feature\ 1, feature\ 2, feature\ 3) \propto$$
$$P(feature\ 3 | C = class\ 1) * P(C = class\ 1 | feature\ 1, feature\ 2). \qquad (21)$$

$\propto likelihood_{feature3} * prior_{feature3}$

where $likelihood_{feature3}$ indicates a new likelihood corresponding to the new columnar data points for feature 3 and $prior_{feature3}$ is a prior class probability while it is the posterior during the initial training, i.e., *P(C = class* 1|*feature 1, feature* 2), see equation (2). The Bayesian prediction model can be updated when new features or columns are available by adding the likelihood of new features to a likelihood table. In other words, when adding an additional training dataset that includes an additional feature for each instance, updating the set of probabilities involves generating additional probabilities by calculating a likelihood probability for the additional feature and generating an additional prior probability by taking a value of the posterior probability. To add feature 4, the Bayesian prediction model becomes:

$$P(C = class\ 1 | feature\ 1, feature\ 2, feature\ 3, feature\ 4) \propto$$
$$P(C = feature\ 1, feature\ 2, feature\ 3, featu\ 4 | C = class\ 1) * P(C = class\ 1).$$
$$(22)$$

Assuming feature 1 - feature 4 are independent, equation (22) can be rewritten as:

$$P(C = class\ 1|feature\ 1, feature\ 2, feature\ 3, feature\ 4) \propto$$

$$P(feature\ 1|C = class\ 1) * P(feature\ 2|C = class\ 1) *$$

$$P(feature\ 3|C = class\ 1) * P(feature\ 4|C = class\ 1) * P(C = class\ 1).$$

$$(23)$$

Using equation (20), equation (23) can be rewritten as:

$$P(C = class\ 1|feature\ 1, feature\ 2, feature\ 3, feature\ 4)$$

$$\propto P(feature\ 4|C = class\ 1) * P(C = class\ 1|feature\ 1, feature\ 2, feature\ 3)\ (24)$$

$$\propto likelihood_{feature4} * prior_{feature4}$$

where $likelihood_{feature4}$ indicates a new likelihood corresponding to the new columnar data points for feature 4 and $prior_{feature4}$ is a prior class probability while it is the posterior before adding feature 4 to the training, i.e., $P(C = class\ 1|feature\ 1, feature\ 2, feature\ 3)$, see equation (20).

To add an additional set of samples, which can result in dataset 306, dataset 304 can be denoted as D1 with n1 samples and one feature (e.g., feature 1) that follows normal distribution. Given dataset 304, the posterior probability for class 1 can be calculated using the Bayesian prediction model:

$$P(C = class\ 1|feature\ 1) \propto P(feature\ 1|C = cla\ 1) * P(C = class\ 1).$$

$$(25)$$

Since it is assumed that feature 1 follows normal distribution, equation (25) can be rewritten as:

$$P(C = class\ 1|feature\ 1) \propto \left(\frac{1}{\sigma'_{clas}\ \sqrt{2\pi}} \exp\left[-\frac{(feature1 - \mu'_{class1})^2}{2\sigma'^2_{class1}}\right]\right) *$$

$$\left(\frac{\#\ of\ instances\ with\ class\ 1\ in\ D1}{total\ instances\ in\ D1\ (n1)}\right) \qquad (26)$$

where $\mu'_{cl}$ is the mean value of feature 1 corresponding to class 1 in D1, $\sigma'^2_{class}$ is the variance of feature 1 corresponding to class 1 in D1, and n1 is the total number of instances in D1. For equation (26), the mean and variance corresponding to feature 1 are calculated in addition to the class distribution, or the number of instances in each class. The class distribution is calculated by determining the frequency of instances associated with each class.

At a later point in time, a new dataset is received. The new dataset can be denoted as D2 with n2 samples with feature 1. To compute the posterior probability by combining D2 and D1, the Bayesian prediction model becomes:

$$P_{new}(C = class\ 1|feature\ 1) \propto$$

$$P_{new}(feature\ 1|C = class\ 1) * P_{new}(C = class\ 1) \qquad (27)$$

and the likelihood can be computed as:

$$P_{new}(feature\ 1|C = class\ 1) \propto \left(\frac{1}{\sigma_{class1}\sqrt{2\pi}} \exp\left[-\frac{(feature1 - \mu_{class1})^2}{2\sigma^2_{clas}}\right]\right) \qquad (28)$$

where $\mu_{class1}$ and $\sigma^2_{class}$ are combined mean and combined variance for class 1 instances that can be computed as:

$$\mu_{class1} = \frac{n1*\mu'_{class1}+n2*\mu''_{class1}}{n1+n2} \qquad (28.1)$$

$$\sigma^2_{class1} = \frac{1}{n1+n2} n1 * \left[\sigma'_{cls1}{}^2 + \left(\mu'_{class1} - \mu_{class1}\right)^2\right] + n2 * \left[\sigma''_{class1}{}^2 + \right.$$
$$\left(\mu''_{class1} - \mu_{class1}\right)^2\right] \qquad (28.2)$$

where $\mu''_{class1}$ is the mean value of feature 1 corresponding to class 1 instances in D2, $\sigma''_{clas}{}^2$ is the variance of feature 1 corresponding to class 1 instances in D2, and n2 is the total number of instances in D2. The new class probability can be computed as:

$$P_{new}(C = class\ 1) = \frac{\#\ of\ class\ 1\ instances\ in\ D1\ and\ D2\ combined}{n1+n2} =$$
$$\frac{P(C=class\ 1)*n1+number\ of\ class\ 1\ instances\ in\ D2}{n1+n2} . \qquad (29)$$

Feeding values obtained from equation (28) and equation (29) in equation (27), the posterior probability when D1 and D2 are combined can be computed. Pre-computed hyper-parameters (e.g., $\mu'_{class}$ and $\sigma'_{cl}{}^2$) can be used from the initial dataset (D1) to determine the combined $\mu_{clas}$ and $\sigma^2_{class}$ by computing only the hyper-parameters corresponding to the new dataset (D2). Thus, the Bayesian prediction model can be updated when new rows of information are available by updating both the likelihood and the priors. In other words, when adding an additional training dataset that includes an additional dataset or training record, updating the set of probabilities involves updating the prior probability using the prior probability and a number of training records in the additional dataset having the value for the class.

Adding an additional training dataset one sample at a time, such as to obtain dataset 308 from dataset 306, is similar to adding multiple samples at a time. As an example, suppose a dataset (D) of n samples includes one feature (feature 1) that follows normal distribution with mean $\mu_0$ and variance $\sigma^2_0$. When the Bayesian prediction model is trained, the posterior probability is obtained by:

$$P\ (C\ =\ class\ 1|feature\ 1) \propto P\ (feature\ 1|C\ =\ class\ 1) * P\ (C\ =\ class\ 1).$$
$$(30)$$

$$P(C = class\ 1|feature\ 1) \propto \left(\frac{1}{\sigma_0\sqrt{2\pi}}\exp\left[-\frac{(feature1-\mu_0)^2}{2\sigma_0{}^2}\right]\right) *$$
$$\left(\frac{\#\ of\ instances\ with\ class\ 1\ in\ D}{n}\right) \qquad (31)$$

For an observation of feature 1 being equal to x and the class being class 1, the posterior probability for the class being class 1 changes to:

$$P_{new}(C = class\ 1|feature\ 1) \propto \left(\frac{1}{\sigma_1\sqrt{2\pi}}\exp\left[-\frac{(feature1-\mu_1)^2}{2\sigma_1{}^2}\right]\right) *$$
$$\left(\frac{\#\ of\ instances\ with\ class\ 1\ in\ D+1}{n+1}\right) \qquad (32)$$

where $\mu_1$ and $\sigma^2_1$ can be computed by:

$$\mu_1 = \frac{\mu_0 *n+x}{n+1} \qquad (33)$$

$$C_1 = C_0 + (x - \mu_0)(x - \mu_1), \text{ where } C_0 = n * \sigma^2{}_0, \text{ so } \sigma^2{}_1 = \frac{C_1}{n+1} \tag{34}$$

For other classes, the conditional probability (or the likelihood) remains the same while the prior changes as:

$$P_{new}(C = class\ 2) = \frac{n}{n+1} P(C = class\ 2) \tag{35}$$

$$P_{new}(C = class\ 3) = \frac{n}{n+1} P(C = class\ 3). \tag{36}$$

As illustrated with the above equations, the Bayesian prediction model can be updated when new features or columns are available by adding the likelihood of new features to the likelihood table. Additionally, the Bayesian prediction model can be updated when new rows of information are available by updating both the likelihood and priors. Also, the Bayesian prediction model can be updated when new data (one row or observation) is available by updating the class-specific likelihood and prior, and priors only for the other classes. Note that while the above example describes how to compute the posteriori probability using a parametric model (e.g., the normal distribution model), a non-parametric model can be utilized. For example, *P* (*feature* |*C*) can be estimated directly from data in the dataset including the binned data discussed below.

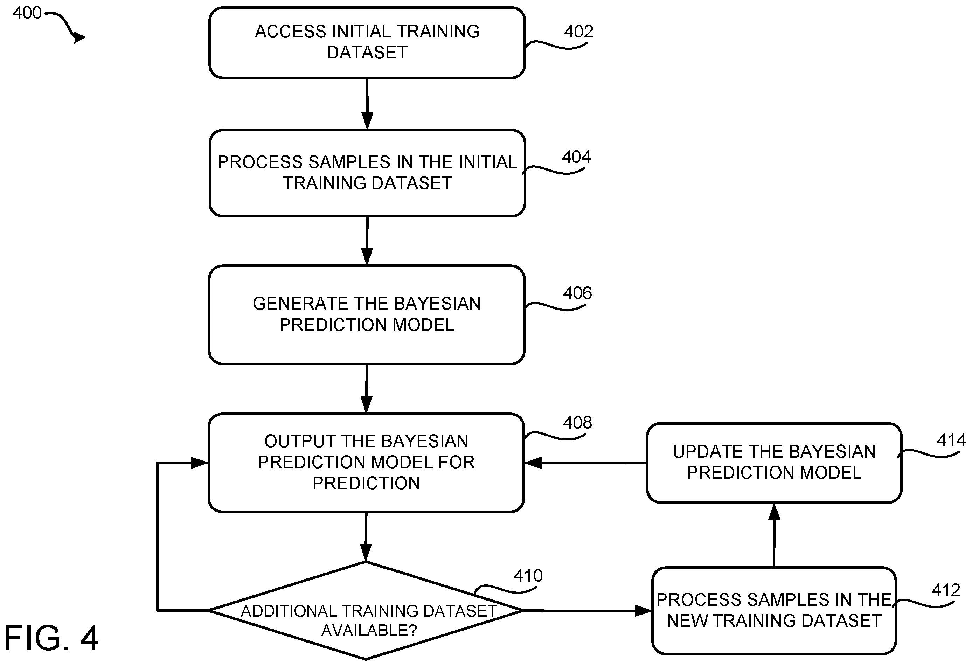

FIG. 4 shows an example of a process for training the Bayesian prediction model, according to certain aspects of the present disclosure. One or more computing devices (e.g., the model training server 110) implement operations depicted in FIG. 4 by executing suitable program code (e.g., the model training application 112). For illustrative purposes, the process 400 is described with reference to certain examples depicted in the figures. Other implementations, however, are possible.

At operation 402, the process 400 involves accessing an initial training dataset 126. The initial training dataset 126 includes training records or training samples. Each of the training records or training samples can have multiple predictor variables. In some examples, each training record corresponds to an entity, such as an individual, an organization, a computing system, a computing device, or any other type of entities. The predictor variables for the training record can include the features or characteristics that can be utilized to predict the risk or other aspects associated with the entity when the entity performs certain operations such as accessing an interactive computing environment.

At operation 404, the process 400 involves processing samples in the initial training dataset 126. In some examples, the predictor variables associated with an entity may be correlated and thus contain redundancy. The correlation could impact the prediction accuracy. In order to reduce the correlation and remove the redundancy, the initial training dataset 126 is processed before being used to generate the Bayesian prediction model 120. Pairwise correlations are calculated among the predictor variables. For a pair of predictor variables having a high correlation (e.g., higher than a threshold value), the predictor variable having a higher predictive score is kept for training while the other predictor variable is removed from the training dataset. For example, a first predictor variable having a first predictive score may be removed from the training dataset based on the correlation between the first predictor variable and the second predictor variable being higher than the threshold value and the first predictive score being lower than a second predictive score for the second predictor variable. In some examples, the Kolmogorov-Smirnov (KS) score of a predictor variable can be used as the predictive score of the predictor variable and Spearman correlation can be used for calculating the correlation. The KS score is indicative of the quality of a model, so a higher KS score for a predictor variable can indicate that the predictor variable is more predictive of an output risk indicator than a predictor variable having a lower KS score. The Spearman correlation is a rank-order correlation that first involves ranking each training sample according to multiple features, where a ranking is determined for each feature. A difference between the rankings is then determined and the difference is used to determine the Spearman correlation.

At operation 406, the Bayesian prediction model 120 is generated. The processed predictor variables, with potentially fewer predictor variables than the initial training dataset 126, can be utilized to generate the Bayesian prediction model 120. The Bayesian prediction model 120 is generated by at least calculating a set of parameters based on the processed predictor variables. The set of parameters can include a set of probabilities (e.g., conditional probabilities and class probabilities) that includes a likelihood probability for a predictor variable indicating a conditional probability of the predictor variable conditioned on a value of the risk indicator and a prior probability indicating a probability of the risk indicator taking the value. For example, if the Bayesian prediction model 120 is built to predict a classification outcome for an entity based on the predictor variables associated with the entity, the class probability for a particular class is the probability of the class occurring in the processed predictor variables. The conditional probabilities can include the conditional probabilities of the entity having the respective predictor variable values given that the entity is classified into a particular class. These probabilities can be utilized to predict the classification for a target entity based on the predictor variables of the target entity.

At operation 408, the Bayesian prediction model 120 is output for prediction. To use the Bayesian prediction model 120 to make a prediction for a target entity, the maximum a posteriori estimation can be utilized. In these examples, posteriori probabilities of the target entity being classified into individual classes can be calculated. The calculation can be based on the class probabilities and the conditional probabilities of the Bayesian prediction model 120. The predicted class that leads to the highest posteriori probability can be output as the predicted class.

At operation 408, the process 400 involves determining whether an additional training dataset 128 is available. The additional training dataset 128 may be new data collected as time goes by after the initial training. Or, the additional training dataset 128 may be received from an additional data source. These additional training datasets 128 may include predictor variables that are not included in the initial training dataset 126. So, if an additional training dataset is available, the process 400 proceeds to operation 412 to process and update the Bayesian prediction model 120. Otherwise, the process 400 returns to operation 406 and outputs the Bayesian prediction model 120 trained using the initial training dataset 126.

At operation 412, the process 400 involves processing samples in the additional training dataset 128. The processing can involve similar processing to that of operation 404, where pairwise correlations are calculated between the predictor variables in the existing training dataset and the additional training dataset and among the additional training dataset and a predictive score is calculated for each predictor variable. For correlations above a threshold value, the predictor variable having a higher predictive score can be kept for training while the other predictor variable can be removed from the training dataset.

At operation 414, the process 400 involves updating the Bayesian prediction model 120. The processed additional training dataset can be utilized to update the Bayesian prediction model 120 as they become available without re-generating the Bayesian prediction model 120. In other words, the parameters of the existing Bayesian prediction model can be used to calculate the updated parameters for the Bayesian prediction model, thereby generating the updated Bayesian prediction model. For example, if the additional training dataset 128 includes an additional predictor variable for each of the training records, the parameters of the Bayesian prediction model 120 can be updated by generating additional probabilities by calculating a conditional probability for the additional predictor variable and generating an additional prior probability by taking the value of the posterior probability of the existing model. If the additional training dataset 128 includes an additional training record, updating the parameters of the Bayesian prediction model 120 can include updating the class probability using the class probability of the existing Bayesian prediction model and the number of training records in the additional training dataset having the corresponding class. In this way, the parameters of the existing Bayesian prediction model can be used to calculate the parameters of the updated Bayesian prediction model without calculating these parameters from scratch. The process 400 then returns to operation 408 where the Bayesian prediction model 120 is output for prediction.

In some examples, it may be helpful to provide explanatory data for the prediction made by the Bayesian prediction model 120. The explanatory data can indicate the impact of one or more input predictor variables on the predicted output risk indicator. To provide the explanatory data, the Bayesian prediction model 120 can be generated to enforce a monotonicity between each of the input predictor variables 124 and the output prediction (e.g., the posterior probability).

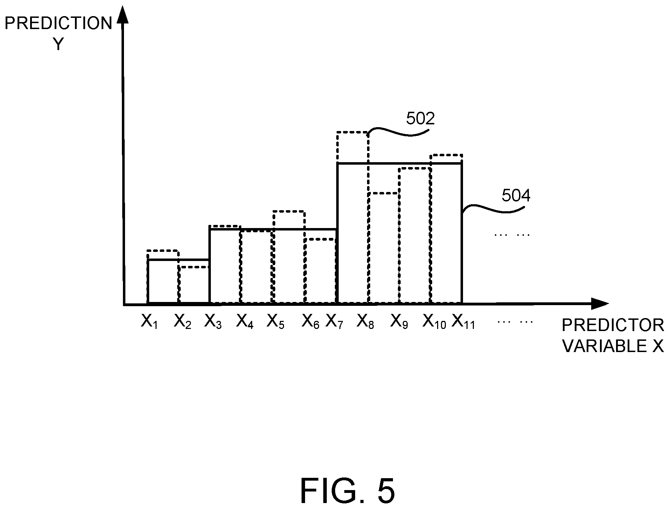

FIG. 5 shows an example of a binning operation performed on an input predictor variable to ensure the monotonicity of the Bayesian prediction model 120, according to certain aspects of the present disclosure. In some examples, the monotonicity is enforced by processing each predictor variable so that the values of the predictor variable are monotonic to the posterior probability (e.g., a positive change in the predictor variable always leads to a positive or negative change in the posterior probability). In FIG. 5, the values of a predictor variable are shown on the x-axis and the posterior probability is shown on the y-axis. To enforce monotonicity, the values of a predictor variable are divided into a first set of bins and posterior probability for each bin is determined. The posterior probability for each bin is stored in a look-up table. If the values of the posterior probability are not monotonic with respect to the values of the predictor variables in the bins, a second set of bins are generated. The second set of bins can be generated by merging two or more bins in the first set of bins into one bin so that representative values of the predictor variable in the second set of bins are monotonic with respect to the posterior probability. The posterior probability of each bin of the second set of bins may be calculated using a representative value of the bin, such as the middle point value of the bin. The look-up table can be updated to reflect the re-binning.

The second set of bins are used to represent the predictor variable when the Bayesian prediction model is generated. For example, a value of the predictor variable can be converted into the representative value of a bin in the second set where the value of the predictor variable falls into. The parameters of the Bayesian prediction model (i.e., the conditional probabilities and class probabilities) can also be calculated based on the binned predictor variables instead of the initial predictor variables. In this way, the output of the Bayesian prediction model (e.g., the posterior probability) can be made monotonic to each of the predictor variables and the impact of a predictor variable can be generated using methods such as point-below-max for use in generating the explanatory data.

In FIG. 5, ten bins of a first set of bins 502 (shown in dotted lines) for values for the predictor variable initially are shown. The values of the ten bins are not monotonic. Then, a second set of bins 504 (shown in solid lines) is generated to enforce monotonicity. The second set of bins 504 includes three bins. To generate the three bins, the first two bins of the first set of bins are merged, the third through sixth bins of the first set of bins are merged, and the seventh through tenth bins of the first set of bins are merged. The representative values of the predictor variable in the second set of bins are monotonic with respect to the posterior probability.

Based on the monotonic Bayesian model, explanatory data can be generated using any appropriate method described herein. An example of explanatory data is a reason code, adverse action code, or other data indicating an impact of a given independent variable on a predictive output. For instance, explanatory reason codes may indicate why an entity received a particular predicted output. The explanatory reason codes can be generated from the Bayesian model to satisfy suitable requirements. Examples of these rules include explanatory requirements, business rules, regulatory requirements, etc.

In some aspects, a reason code or other explanatory data may be generated using a "points below max" approach or a "points for max improvement" approach. The independent predictor variable values that maximize the model output $F(\mathbf{x}; \beta)$ used for generating reason codes (or other explanatory data) can be determined using the monotonicity constraints that were enforced in model development. Here, $F()$ represent the model discussed above; $\mathbf{x} = [x_1, x_2, ... , x_n]$ represent the predictor variables or features used by the model as discussed above; and $\beta$ is the set of all parameters associated with the model and all other variables previously defined. Let $x_i^*$ $(i = 1, ... , n)$ be the right endpoint of the domain of the independent variable $x_i$. Then, for a monotonically increasing function, the output function is maximized at $F(\mathbf{x}^*; \beta)$. A "points below max" approach determines the difference between, for example, an idealized output and a particular entity (e.g. subject, person, or object) by finding values of one or more independent variables that maximize $F(\mathrm{x}; \beta)$.

Reason codes for the independent variables may be generated by rank ordering the differences obtained from either of the following functions:

$$F(x_1^*, x_2^*, ..., x_i^*, ... x_n^*; \boldsymbol{\beta}) - F(x_1^*, x_2^*, ..., x_i, ... x_n^*; \boldsymbol{\beta})$$

$$F(x_1, ..., x_i^*, ..., x_n; \boldsymbol{\beta}) - F(x_1, ..., x_i, ..., x_n; \boldsymbol{\beta})$$

In these examples, the first function is used for a "points below max" approach and the second function is used for a "points for max improvement" approach. For a monotonically decreasing function, the left endpoint of the domain of the independent variables can be substituted into $x_j^*$.

In the example of a "points below max" approach, a decrease in the output function for a given entity is computed using a difference between the maximum value of the output function using $\boldsymbol{x^*}$ and the decrease in the value of the output function given $\boldsymbol{x}$. In the example of a "points for max improvement" approach, a decrease in the output function is computed using a difference between two values of the output function. In this case, the first value is computed using the output-maximizing value for $x_j^*$ and a particular entity's values for the other independent variables. The decreased value of the output function is computed using the particular entity's value for all of the independent variables $\boldsymbol{x_i}$.

*Example of Computing System for Machine-Learning Operations*

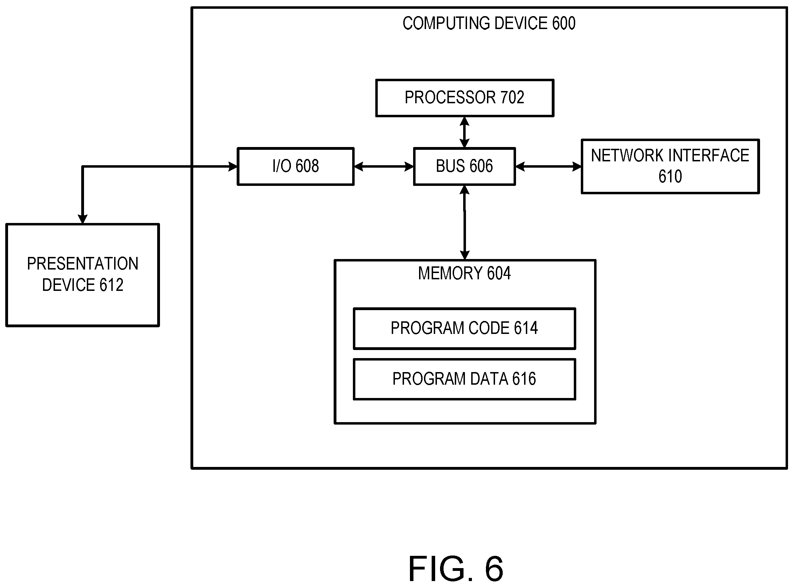

Any suitable computing system or group of computing systems can be used to perform the operations for the machine-learning operations described herein. For example, FIG. 6 is a block diagram depicting an example of a computing device 600, which can be used to implement the risk assessment server 118 or the model training server 110. The computing device 600 can include various devices for communicating with other devices in the operating environment 100, as described with respect to FIG. 1. The computing device 600 can include various devices for performing one or more transformation operations described above with respect to FIGS. 1-5.

The computing device 600 can include a processor 602 that is communicatively coupled to a memory 604. The processor 602 executes computer-executable program code stored in the memory 604, accesses information stored in the memory 604, or both. Program code may include machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing or receiving information, data, arguments, parameters, or memory contents. Information, arguments, parameters, data, etc. may be passed, forwarded, or transmitted via any suitable means including memory sharing, message passing, token passing, network transmission, among others.

Examples of a processor 602 include a microprocessor, an application-specific integrated circuit, a field-programmable gate array, or any other suitable processing device. The processor 602 can include any number of processing devices, including one. The processor 602 can include or communicate with a memory 604. The memory 604 stores program code that, when executed by the processor 602, causes the processor to perform the operations described in this disclosure.

The memory 604 can include any suitable non-transitory computer-readable medium. The computer-readable medium can include any electronic, optical, magnetic, or other storage device capable of providing a processor with computer-readable program code or other program code. Non-limiting examples of a computer-readable medium include a magnetic disk, memory chip, optical storage, flash memory, storage class memory, ROM, RAM, an ASIC, magnetic storage, or any other medium from which a computer processor can read and execute program code. The program code may include processor-specific program code generated by a compiler or an interpreter from code written in any suitable computer-programming language. Examples of suitable programming language include Hadoop, C, C++, C#, Visual Basic, Java, Python, Perl, JavaScript, ActionScript, etc.

The computing device 600 may also include a number of external or internal devices such as input or output devices. For example, the computing device 600 is shown with an input/output interface 608 that can receive input from input devices or provide output to output devices. A bus 606 can also be included in the computing device 600. The bus 606 can communicatively couple one or more components of the computing device 600.

The computing device 600 can execute program code 614 that includes the risk assessment application 114 and/or the model training application 112. The program code 614 for the risk assessment application 114 and/or the model training application 112 may be resident in any suitable computer-readable medium and may be executed on any suitable processing device. For example, as depicted in FIG. 6, the program code 614 for the risk assessment application 114 and/or the model training application 112 can reside in the memory 604 at the computing device 600 along with the program data 616 associated with the program code 614, such as the predictor variables 124 and/or the initial training dataset 126. Executing the risk assessment application 114 or the model training application 112 can configure the processor 602 to perform the operations described herein.

In some aspects, the computing device 600 can include one or more output devices. One example of an output device is the network interface device 610 depicted in FIG. 6. A network interface device 610 can include any device or group of devices suitable for establishing a wired or wireless data connection to one or more data networks described herein. Non-limiting examples of the network interface device 610 include an Ethernet network adapter, a modem, etc.

Another example of an output device is the presentation device 612 depicted in FIG. 6. A presentation device 612 can include any device or group of devices suitable for providing visual, auditory, or other suitable sensory output. Non-limiting examples of the presentation device 612 include a touchscreen, a monitor, a speaker, a separate mobile computing device, etc. In some aspects, the presentation device 612 can include a remote client-computing device that communicates with the computing device 600 using one or more data networks described herein. In other aspects, the presentation device 612 can be omitted.

The foregoing description of some examples has been presented only for the purpose of illustration and description and is not intended to be exhaustive or to limit the disclosure to the precise forms disclosed. Numerous modifications and adaptations thereof will be apparent to those skilled in the art without departing from the scope of the disclosure.

**Claims**

1. A method (200) wherein one or more processing devices (702) perform operations comprising:
   responsive to receiving a risk assessment query for a target entity, determining (206), using a Bayesian prediction model (120), a risk indicator for the target entity from predictor variables (124) associated with the target entity, wherein the Bayesian prediction model determines the risk indicator based on a set of parameters associated with the Bayesian prediction model that are calculated based on an initial training dataset (126) and an additional training dataset (128), and wherein the Bayesian prediction model is generated by performing operations comprising:

   receiving (402) the initial training dataset for the Bayesian prediction model, the initial training dataset comprising a plurality of training records and a plurality of predictor variables;
   generating (406) the Bayesian prediction model by at least calculating the set of parameters based on the initial training dataset;
   receiving the additional training dataset for the Bayesian prediction model, the additional training dataset containing an additional predictor variable or an additional training record; and
   updating (414) the Bayesian prediction model by updating the set of parameters based on the set of parameters and the additional training dataset; and
   transmitting (210), to a remote computing device (104), a response to the risk assessment query including at least the risk indicator for use in controlling access of the target entity to one or more interactive computing environments

**characterised in that** the operations further comprise, prior to generating the Bayesian prediction model:

determining a correlation between a first predictor variable and a second predictor variable in the plurality of predictor variables;

determining a first predictive score for the first predictor variable and a second predictive score for the second predictor variable; and

removing the first predictor variable from the plurality of predictor variables based on the correlation being higher than a threshold value of correlation and the first predictive score being lower than the second predictive score.

2. The method (200) of claim 1, wherein:

the set of parameters comprise a set of probabilities;

the set of probabilities comprises a) a likelihood probability for a predictor variable of the plurality of predictor variables (124) indicating a conditional probability of the predictor variable conditioned on a value of the risk indicator and b) a prior probability indicating a probability of the risk indicator taking the value; and

determining the risk indicator based on the set of parameters comprises calculating a posterior probability from the set of probabilities.

3. The method (200) of claim 2, wherein the additional training dataset (128) comprises the additional predictor variable for each of the plurality of training records, and wherein updating the set of parameters comprises generating additional probabilities by calculating a likelihood probability for the additional predictor variable and generating an additional prior probability by taking a value of the posterior probability.

4. The method (200) of claim 2, wherein the additional training dataset (128) comprises the additional training record, and wherein updating the set of parameters comprises updating the prior probability using the prior probability and a number of training records in the additional training dataset having the value for the risk indicator.

5. The method (200) of claim 1, wherein the correlation is a Spearman correlation and the first predictive score and the second predictive score are each a Kolmogorov-Smirnov (KS) score.

6. The method (200) of claim 1, wherein the operations further comprise, prior to generating (406) the Bayesian prediction model (120):

dividing values of a predictor variable in the initial training dataset into a first set of bins; and

generating a second set of bins by merging two or more bins in the first set of bins into one bin, wherein representative values of the predictor variable in the second set of bins are monotonic with respect to the risk indicator.

7. The method (200) of claim 1, wherein the risk indicator comprises at least one of a risk classification for the target entity, a probability of the target entity being classified in the risk classification.

8. A system (600) comprising:

a processing device (702); and

a memory device (604) in which instructions (614) executable by the processing device are stored for causing the processing device to perform the method (200) of any preceding claim.

9. A non-transitory computer-readable storage medium (604) having program code (614) that is executable by a processor device (702) to cause a computing device (600) to perform the method (200) of any of claims 1-7.

**Patentansprüche**

1. Eine Methode (200), bei der ein oder mehrere Verarbeitungsgeräte (702) Operationen durchführen, die aus folgenden Operationen bestehen:

reagierend auf den Empfang einer Risikobewertungsanfrage für eine Zielentität, wobei (206) mit einem bayesschen Vorhersagemodell (120) ein Risikoindikator für die Zielentität aus Prädiktorvariablen (124) bestimmt wird, die mit der Zielentität zugeordnet sind, wobei das Bayessche Vorhersagemodell den Risikoindikator anhand einer Parametermenge bestimmt, die mit dem Bayesschen Vorhersagemodell auf Basis eines initialen Trainingsdatensatzes (126) und eines zusätzlichen Trainingsdatensatzes (128) berechnet werden, und wobei das bayessche Vorhersagemodell durch Durchführung von Operationen erzeugt wird, die folgendes umfassen:

erhielt (402) den initialen Trainingsdatensatz für das Bayessche Vorhersagemodell, den initialen Trainingsdatensatz mit einer Vielzahl von Trainingsdatensätzen und einer Vielzahl von Prädiktorvariablen;
Erstellung (406) des Bayesschen Vorhersagemodells, indem zumindest die Parametermenge auf Basis des initialen Trainingsdatensatzes berechnet wird;
erhält den zusätzlichen Trainingsdatensatz für das Bayessche Vorhersagemodell, den zusätzlichen Trainingsdatensatz mit einer zusätzlichen Prädiktorvariablen oder einem zusätzlichen Trainingsdatensatz; und
Aktualisierung (414) des Bayesschen Vorhersagemodells durch Aktualisierung der Parametermenge basierend auf dem Parametersatz und dem zusätzlichen Trainingsdatensatz; und
Übertragung (210) an ein entferntes Rechengerät (104), eine Antwort auf die Risikobewertungsanfrage, die mindestens den Risikoindikator zur Steuerung des Zugriffs der Zieleinheit zu einer oder mehreren interaktiven Rechenumgebungen enthält.
gekennzeichnet darin, dass die Operationen vor der Erstellung des bayesschen Vorhersagemodells weiter umfassen:

die Bestimmung einer Korrelation zwischen einer ersten Prädiktorvariable und einer zweiten Prädiktorvariable in der Pluralität der Prädiktorvariablen;
Bestimmung eines ersten prädiktiven Werts für die erste Prädiktorvariable und eines zweiten Prädiktorwerts für die zweite Prädiktorvariable; und
wobei die erste Prädiktorvariable aus der Pluralität der Prädiktorvariablen entfernt wird, basierend darauf, dass die Korrelation höher als ein Schwellenwert der Korrelation und der erste prädiktive Wert niedriger als der zweite ist.

2. Das Verfahren (200) von Anspruch 1, wobei:

Die Menge der Parameter bildet eine Menge von Wahrscheinlichkeiten;
Die Menge der Wahrscheinlichkeiten besteht aus a) einer Likelihood-Wahrscheinlichkeit für eine Prädiktorvariable der Pluralität der Prädiktorvariablen (124), die eine bedingte Wahrscheinlichkeit der Prädiktorvariablen angibt, bedingt auf einen Wert des Risikoindikators, und b) eine Vorwahrscheinlichkeit, die eine Wahrscheinlichkeit angibt, dass der Risikoindikator diesen Wert annimmt; und
Die Bestimmung des Risikoindikators anhand der Parametermenge beinhaltet die Berechnung einer posterioren Wahrscheinlichkeit aus dem Mengen.

3. Die Methode (200) der Behauptung 2, bei der der zusätzliche Trainingsdatensatz (128) die zusätzliche Prädiktorvariable für jede der Pluralitätsdaten der Trainingsdatensätze umfasst und bei der Aktualisierung des Parametersatzes die Erzeugung zusätzlicher Wahrscheinlichkeiten durch Berechnung einer Likelihood-Wahrscheinlichkeit für die zusätzliche Prädiktorvariable und die Erzeugung einer zusätzlichen Vorwahrscheinlichkeit durch Annahme eines Wertes der posterioren Wahrscheinlichkeit beinhaltet.

4. Die Methode (200) von Anspruch 2, bei der der zusätzliche Trainingsdatensatz (128) den zusätzlichen Trainingsdatensatz umfasst und bei der Aktualisierung des Parametersatzes die Aktualisierung der Vorwahrscheinlichkeit unter Verwendung der Vorwahrscheinlichkeit und einer Anzahl von Trainingsdatensätzen im zusätzlichen Trainingsdatensatz mit dem Wert für den Risikoindikator umfasst.

5. Die Methode (200) von Behauptung 1, wobei die Korrelation eine Spearman-Korrelation ist und der erste und zweite prädiktive Wert jeweils ein Kolmogorov-Smirnov (KS)-Wert sind.

6. Die Methode (200) von Behauptung 1, bei der die Operationen vor der Erzeugung des bayesschen Vorhersagemodells (120) weiter umfassen:

die Werte einer Prädiktorvariablen im initialen Trainingsdatensatz in einen ersten Satz von Bins zu teilen; und
Erzeugung einer zweiten Menge von Bins durch Zusammenführung von zwei oder mehr Bins aus der ersten Bin-Gruppe zu einem bin, wobei repräsentative Werte der Prädiktorvariablen in der zweiten Bin-Menge monoton zum Risikoindikator sind.

**7.** Die Methode (200) von Anspruch 1, bei der der Risikoindikator mindestens eine Risikoklassifikation für die Zieleinheit umfasst, also die Wahrscheinlichkeit, dass die Zieleinheit in die Risikoklassifizierung eingestuft wird.

**8.** Ein System (600), das umfasst:

ein Verarbeitungsgerät (702); und
ein Speichergerät (604), in dem Befehle (614), die vom Verarbeitungsgerät ausführbar sind, gespeichert werden, um das Verarbeitungsgerät dazu zu bringen, die Methode (200) einer vorherigen Behauptung auszuführen.

**9.** Ein nicht-transitores, computerlesbares Speichermedium (604) mit Programmcode (614), der von einem Prozessorgerät (702) ausführbar ist, sodass ein Computergerät (600) die Methode (200) eines der Ansprüche 1-7 ausführt.

**Revendications**

**1.** Une méthode (200) dans laquelle un ou plusieurs dispositifs de traitement (702) effectuent des opérations comprenant :

réactif à la réception d'une requête d'évaluation des risques pour une entité cible, déterminant (206), à l'aide d'un modèle de prédiction bayésien (120), un indicateur de risque pour l'entité cible à partir des variables prédictrices (124) associées à l'entité cible, où le modèle de prédiction bayésien détermine l'indicateur de risque à partir d'un ensemble de paramètres associés au modèle de prédiction bayésien, calculés à partir d'un jeu de données d'entraînement initial (126) et d'un jeu de données d'entraînement supplémentaire (128), et où le modèle de prédiction bayésien est généré en effectuant des opérations comprenant :
recevant (402) le jeu de données d'entraînement initial pour le modèle de prédiction bayésien, le jeu de données d'entraînement initial comprenant une pluralité d'enregistrements d'entraînement et une pluralité de variables prédictrices ;
générant (406) le modèle de prédiction bayésien en calculant au moins l'ensemble des paramètres à partir du jeu de données d'entraînement initial ;
recevant le jeu de données d'entraînement supplémentaire pour le modèle de prédiction bayésien, le jeu de données d'entraînement additionnel contenant une variable prédictrice supplémentaire ou un enregistrement d'entraînement supplémentaire ; et
mise à jour (414) du modèle de prédiction bayésien en mettant à jour l'ensemble des paramètres basé sur cet ensemble et le jeu de données d'entraînement supplémentaire ; et
transmission (210), vers un dispositif informatique distant (104), une réponse à la requête d'évaluation des risques incluant au moins l'indicateur de risque à utiliser pour contrôler l'accès de l'entité cible à un ou plusieurs environnements informatiques interactifs
**caractérisé par le fait que** les opérations comprennent en outre, avant de générer le modèle de prédiction bayésien, :

déterminer une corrélation entre une première variable prédictrice et une seconde variable prédictrice dans la pluralité des variables prédictrices ;
déterminer un premier score prédictif pour la première variable prédictive et un second score prédictif pour la seconde variable prédictive ; et
En retirant la première variable prédictive de la pluralité des variables prédictives sur la base de la corrélation supérieure à une valeur seuil de corrélation et du premier score prédictif inférieur au second score prédictif.

**2.** La méthode (200) de l'affirmation 1, dans laquelle :

l'ensemble des paramètres comprend un ensemble de probabilités ;
L'ensemble des probabilités comprend a) une probabilité de vraisemblance pour une variable prédictrice de la pluralité de variables prédictrices (124) indiquant une probabilité conditionnelle de la variable prédictrice conditionnée à une valeur de l'indicateur de risque, et b) une probabilité a priori indiquant une probabilité que l'indicateur de risque prenne la valeur ; et
déterminer l'indicateur de risque à partir de l'ensemble des paramètres consiste à calculer une probabilité a posteriori à partir de l'ensemble des probabilités.

3. La méthode (200) de l'affirmation 2, dans laquelle le jeu de données d'entraînement supplémentaire (128) comprend la variable prédictive supplémentaire pour chacun des nombreux enregistrements d'entraînement, et où la mise à jour de l'ensemble des paramètres consiste à générer des probabilités supplémentaires en calculant une probabilité de vraisemblance pour la variable prédictive additionnelle et en générant une probabilité a priori supplémentaire en prenant une valeur de la probabilité a posteriori.

4. La méthode (200) de l'affirmation 2, dans laquelle le jeu de données d'entraînement supplémentaire (128) comprend l'enregistrement d'entraînement additionnel, et où la mise à jour de l'ensemble des paramètres consiste à mettre à jour la probabilité a priori en utilisant la probabilité antérieure et un certain nombre d'enregistrements d'entraînement dans l'ensemble de données d'entraînement additionnel ayant la valeur de l'indicateur de risque.

5. La méthode (200) de l'affirmation 1, dans laquelle la corrélation est une corrélation de Spearman et le premier score prédictif et le second score prédictif sont chacun un score de Kolmogorov-Smirnov (KS).

6. La méthode (200) de l'affirmation 1, dans laquelle les opérations comprennent en outre, avant de générer (406), le modèle de prédiction bayésien (120) :

   la division des valeurs d'une variable prédictive dans l'ensemble d'entraînement initial en un premier ensemble de bins ; et
   générant un second ensemble de bacs en fusionnant deux ou plusieurs bacs dans le premier ensemble de bacs en un seul, où les valeurs représentatives de la variable prédictrice dans le second ensemble de bacs sont monotones par rapport à l'indicateur de risque.

7. La méthode (200) de la revendication 1, dans laquelle l'indicateur de risque comprend au moins un membre d'une classification de risque pour l'entité cible, soit la probabilité que l'entité cible soit classée dans la classification de risque.

8. Un système (600) comprenant :

   un dispositif de traitement (702) ; et
   un dispositif mémoire (604) dans lequel les instructions (614) exécutables par le dispositif de traitement sont stockées pour faire exécuter par le dispositif de traitement la méthode (200) de toute revendication précédente.

9. Un support de stockage informatique lisible non transitoire (604) possédant un code de programme (614) exécutable par un dispositif processeur (702) pour amener un dispositif informatique (600) à exécuter la méthode (200) de l'une des revendications 1 à 7.

FIG. 1

RISK ASSESSMENT COMPUTING SYSTEM 130

RISK ASSESSMENT SERVER 118

RISK ASSESSMENT APPLICATION 114

BAYESIAN PREDICTION MODEL 120

MODEL TRAINING SERVER 110

MODEL TRAINING APPLICATION 112

BAYESIAN PREDICTION MODEL 120

CLIENT COMPUTING SYSTEMS 104

PUBLIC DATA NETWORK 108

USER COMPUTING SYSTEMS 106

NETWORK 116

RISK DATA REPOSITORY 122

PREDICTOR VARIABLES 124

INITIAL TRAINING DATASET 126

ADDITIONAL TRAINING DATASET(S) 128

100

200

RECEIVE A RISK ASSESSMENT
QUERY — 202

↓

ACCESS A BAYESIAN PREDICTION
MODEL CONFIGURED TO
GENERATE RISK INDICATOR
VALUES BASED ON INPUT
PREDICTOR VARIABLES — 204

↓

COMPUTE AN OUTPUT RISK
INDICATOR FOR THE INPUT
PREDICTOR VARIABLES
ASSOCIATED WITH THE QUERY
USING THE BAYESIAN MODEL — 206

↓

GENERATE EXPLANATORY DATA
USING THE BAYESIAN MODEL — 208

↓

TRANSMIT A RESPONSE TO THE
RISK ASSESSMENT QUERY THAT
INCLUDES THE OUTPUT RISK
INDICATOR AND THE
EXPLANATORY DATA — 210

↓

END

FIG. 2

FIG. 3

FIG. 4

400

402 — ACCESS INITIAL TRAINING DATASET

404 — PROCESS SAMPLES IN THE INITIAL TRAINING DATASET

406 — GENERATE THE BAYESIAN PREDICTION MODEL

408 — OUTPUT THE BAYESIAN PREDICTION MODEL FOR PREDICTION

410 — ADDITIONAL TRAINING DATASET AVAILABLE?

412 — PROCESS SAMPLES IN THE NEW TRAINING DATASET

414 — UPDATE THE BAYESIAN PREDICTION MODEL

FIG. 5

EP 4 433 955 B1

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 45501521

**Non-patent literature cited in the description**

- **DEWAN MD. FARID et al.** Combining Naive Bayes and Decision Tree for Adaptive Intrusion Detection. *International Journal of Network Security & Its Applications (IJNSA)*, April 2010, vol. 2 (2)